# EUROPÄISCHE PATENTSCHRIFT

(11) **EP 0 648 216 B1**
(45) Veröffentlichungstag und Bekanntmachung des Hinweises auf die Patenterteilung: **23.10.1996**
(21) Anmeldenummer: 93915754.1
(22) Anmeldetag: 30.06.1993
(51) Int. Cl.: C07F 9/165, C10M 137/10

(54) **VERWENDUNG VON ADDUKTEN VON O,O DIALKYLDITHIOPHOSPHORSÄUREN**
USE OF ADDUCTS OF O,O-DIALKYLDITHIOPHOSPHORIC ACIDS
UTILISATION DE PRODUITS D'ADDITION D'ACIDES O,O-DIALKYLDITHIOPHOSPHORIQUES

(30) Priorität: 03.07.1992 DE 4221858
(43) Veröffentlichungstag der Anmeldung: 19.04.1995
(73) Patentinhaber: Carl Becker Chemie GmbH & Co., 22113 Hamburg (DE)
(72) Erfinder: LESMANN, Jörg, D-21033 Hamburg (DE); SCHÄFER, Hermann, Georg, D-22043 Hamburg (DE)
(74) Vertreter: Glawe, Delfs, Moll & Partner
(86) Internationale Anmeldenummer: EP9301688
(87) Internationale Veröffentlichungsnummer: WO9401441

(56) Entgegenhaltungen:
- US-A- 2 528 732
- US-A- 5 037 567

## Beschreibung

Verwendung von Addukten von O,O-Dialkyldithiophosphorsäuren an ungesättigte einwertige Alkohole bzw. Ethoxylaten und/oder Propoxylaten derselben als Schmiermitteladditive.

Die Erfindung betrifft die Verwendung von Addukten von O,O-Di-alkyldithiophosphorsäuren der allgemeinen Formel

(R¹O)(R²O)P(S)-SH (I)

in der R¹ und R² gleich oder verschieden sind sowie eine geradkettige oder verzweigte Alkylgruppe mit 4 bis 18 Kohlenstoffatomen bedeuten,
an ungesättigte Verbindungen, ausgewählt aus
a) ungesättigten, geradkettigen oder verzweigten einwertigen Alkoholen mit 10 bis 24 Kohlenstoffatomen und einer Jodzahl im Bereich von 45 bis 180, und
b) Anlagerungsprodukten von Ethylenoxid und/oder Propylenoxid an ungesättigte, geradkettige oder verzweigte, einwertige Alkohole mit 10 bis 24 Kohlenstoffatomen, mit Jodzahlen im Bereich von 30 bis 160,
als Anti-Wear-Additive (AW-Additive) für Schmiermittel.

Ein typisches Beispiel für bisher übliche AW-Additive sind Zinksalze von Alkyldithiophosphorsäuren (Zink-alkyldithiophosphate). Diese Additive weisen zwar in den einschlägigen Tests, z.B. nach DIN 51350 (Schweißlast; Verschleißdurchmesser), befriedigende Eigenschaften auf und finden dementsprechend breite Anwendungen in Schmiermitteln, zeigen jedoch gleichzeitig den Nachteil, daß sie nicht hydrolysestabil sind und einen unangenehmen Geruch aufweisen; darüber hinaus ist ihr Metallgehalt unter Aspekten des Umweltschutzes unerwünscht.

In der US-A 2 528 732 ist der Einsatz von Addukten von 0,0-Dialkyldithiophosphorsäuren an Oleylalkohol als Stabilisatoren für Mineralöle beschrieben; ein Hinweis auf schmiertechnische Eigenschaften dieser Addukte fehlt jedoch. Entsprechendes gilt für analoge Addukte an Terpene gemäß US-A 2 665 295 und US-A 2 689 258.

Weiterhin beschreibt die US-A 3 574 795 Addukte von 0,0-Dialkyldithiophosphorsäuren an konjugierte Diene und deren Einsatz als Schmiermitteladditive. Die erzielbaren AW- und EP(extreme pressure)-Effekte ändern sich jedoch bereits stark, wenn man Addukte an Butadien mit solchen an Chloropren vergleicht, so daß hieraus keine Voraussagen für das Verhalten von Addukten an ungesättigte Alkohole möglich sind. Darüber hinaus fehlt es den vorbekannten Addukten an einer freien OH-Gruppe, die sich bei den erfindungsgemäß einzusetzenden Addukten sehr vorteilhaft bemerkbar macht.

Weiterhin beschreibt die GB-A 700 530 Addukte von Dialkyldithiophosphorsäuren an Bernsteinsäure und den Einsatz der von den Addukten abgeleiteten Metallsalze als Schmiermitteladditive, welche dann allerdings nicht mehr metallfrei sind. Metallfreie analoge Addukte an Malein- und Fumarsäureester sind zwar aus der US-A 3 359 203 bekannt; diese Addukte weisen jedoch veresterte Carbonsäurefunktionen auf, die hydrolytisch zerstört werden können und darüber hinaus unangenehm riechende Folgeprodukte ergeben.

Es besteht daher ein Bedürfnis an Schmiermitteladditiven, die bei unverändert guten Eigenschaften in den entsprechenden Tests geruchsfrei und metallfrei und darüber hinaus hydrolysestabil sind sowie eine verbesserte thermische Stabilität aufweisen. Diese Anforderungen werden durch die erfindungsgemäß zu verwendenden Addukte der Erfindung erfüllt.

Typische Beispiele für die Reste R¹ und R² in den O,O-Dialkyldithiophosphorsäuren der allgemeinen Formel I sind Butyl, Pentyl, Hexyl, Methylpentyl, 2-Ethylhexyl, Octyl, Nonyl, Decyl, Undecyl, Dodecyl, Tetradecyl, Hexadecyl und Octadecyl, wobei Isobutyl, Isoamyl und 2-Ethylhexyl besonders vorteilhaft sind. Die Verbindungen der Formel I sind handelsüblich oder können in üblicher Weise hergestellt werden.

Typische Beispiele für erfindungsgemäß einzusetzende, ungesättigte, geradkettige oder verzweigte einwertige Alkohole sind olefinisch ungesättigte Fettalkohole mit 10 bis 24 Kohlenstoffatomen und einer Jodzahl im Bereich von 45 bis 180, die handelsübliche Produkte darstellen, die aus tierischen und/oder pflanzlichen Fetten und Ölen oder auch auf synthetischem Wege zugänglich sind, z.B. Lauroleyl-, Myristoleyl-, Palmitoleyl-, Oleyl-, Gadoleinyl-, Erucyl-, Linoyl- und Linoleylalkohol, einschließlich technische Gemischen dieser Fettalkohole; besonders bevorzugt sind technische Oleylalkoholgemische mit hohem Gehalt an Oleylalkohol.

Es können auch Anlagerungsprodukte von Ethylenoxid und/oder Propylenoxid an ungesättigte, geradkettige oder verzweigte einwertige Alkohole, insbesondere olefinisch ungesättigte Fettalkohole mit 10 bis 24 Kohlenstoffatomen gemäß den obigen Beispielen, mit Jodzahlen im Bereich von 30 bis 160, erfindungsgemäß eingesetzt werden.

Bevorzugte erfindungsgemäß einzusetzende Addukte sind solche aus O,O-Dialkyldithiophosphorsäuren, bei denen die Reste R¹ und R² eine geradkettige oder verzweigte Alkylgruppe mit 4 bis 12, insbesondere 4 bis 8 Kohlenstoffatomen bedeuten.

Bevorzugt einzusetzende Addukte können weiterhin auch mit Anlagerungsprodukten von Ethylenoxid und/oder Propylenoxid an ungesättigte Fettalkohole mit 16 bis 22 Kohlenstoffatomen erhalten werden; typische Beispiele für derartige Fettalkohole wurden bereits weiter oben erwähnt.

Die erfindungsgemäß einzusehenden Addukte weisen eine von den einwertigen Alkoholen bzw. Alkoxylaten derselben stammende OH-Gruppe auf, die sich überraschend günstig auf die AW-Eigenschaften auswirkt. Obwohl diese Addukte einen niedrigeren Schwefel- und Phosphorgehalt als vergleichbare Addukte, erhalten unter Verwendung von Olefinen ohne OH-Gruppe, aufweisen, zeigen sie im Test im wesentlichen die gleichen AW-Eigenschaften.

Die Addukte der Erfindung können als verschleißmindernde Additive in wassermischbaren und nicht wassermischbaren, mineralölhaltigen und mineralölfreien Schmierstoffen eingesetzt werden. Typische Beispiele für derartige Schmierstoffe, die Metallbearbeitungsflüssigkeiten einschließen, sind die folgenden:
Motorenöl, Getriebeöl, Dieselmotorenöl, Turbinenöl, Schmierfette, Hydrauliköle;
für die spanlose Metallbearbeitung: Ziehöle, Stanzöle, Wälzöle;
für die spangebende Metallbearbeitung: Schneidöle, Honöle, Schleiföle, Räumöle, Tieflochbohröle.

Dabei sind Addukte mit kürzeren Alkylgruppen, insbesondere mit solchen mit 4 bis 6 Kohlenstoffatomen wie Butyl bzw. Isobutyl und Pentyl bzw. Isoamyl sowie Hexyl besonders geeignet als Additive für wasserhaltige Schmiermittel. Addukte mit längeren Alkylgruppen, z. B. mit 8 oder mehr als 8 Kohlenstoffatomen, eignen sich besonders als Additive für wasserfreie Schmiermittel.

Die Erfindung betrifft weiterhin Addukte von 0,0-Dialkyldithiophosphorsäuren der obigen allgemeinen Formel I, in der R¹ und R² jeweils geradkettige oder verzweigte Alkylgruppen mit 4 bis 6 Kohlenstoffatomen bedeuten, an ungesättigte Verbindungen der obigen Definitionen.

Die Addukte der Erfindung können in an sich bekannter Weise durch Addition von O,O-Dialkyldithiophosphorsäuren an einwertige Alkohole mit olefinischen Doppelbindungen bzw. an Ethylenoxid- und/oder Propylenoxid-Addukte derselben hergestellt werden, und zwar im allgemeinen bei erhöhten Temperaturen, vorzugsweise von 110 bis 150, insbesondere von 125 bis 140°C. Bei diesen Reaktionstemperaturen ist im allgemeinen der Einsatz von Katalysatoren nicht erforderlich.

Die erforderlichen Reaktionszeiten liegen in der Größenordnung von einigen Stunden. Werden die Reaktionszeiten bei einer bestimmten Reaktionstemperatur zu lang, können die Temperaturen in gewissem Umfang erhöht werden, solange keine Zersetzungserscheinungen in dem Reaktionsgemisch auftreten. Zu kürzeren Reaktionszeiten gelangt man auch, wenn man die Dialyldithiophosphorsäuren der Formel I in geringem, z.B. bis zu 10 %-igem, Überschuß, bezogen auf eingesetzte ungesättigte Verbindungen, einsetzt. Die dann in dem Reaktionsgemisch enthaltenen überschüssigen Mercaptogruppen werden zweckmäßigerweise nach Beendigung der Umsetzung mit Basen, insbesondere Aminen, bis zu einem pH-Wert im Bereich von 7 bis 8, neutralisiert; hierfür besonders geeignete Amine sind Mono-, Di- oder, soweit sterisch möglich, Tri-(C₄-C₁₈)-alkylamine mit geradkettigen, verzweigten oder cyclischen Alkylgruppen; weiterhin auch Alkanolamine wie Ethanolamin, Diethanolamin oder Triethanolamin, diese jedoch nur, wenn die erfindungsgemäß zu verwendenden Verbindungen für wassermischbare Schmierstoffe vorgesehen sind. Im übrigen empfiehlt sich die Behandlung mit den vorgenannten Aminen auch als Desodorierung für aus äquimolaren Mengen an Monoalkoholen und Dialkyldithiophosphorsäuren hergestellte Addukte.

Die Erfindung wird im folgenden anhand von bevorzugten Ausführungsbeispielen näher erläutert; die Vergleichsbeispiele 1, 2 und 3 gehören dabei nicht zu der Erfindung. Vergleichsbeispiel 3 zeigt durch die Verwendung von Diisopropyldithiophosphorsäure einen guten WSD-Wert, welcher daraus resultiert, daß dieses Produkt durch seine geringe thermische Stabilität schnell zerstört wird und somit der hohe Anteil an S und P zur Reaktion kommt. Schon die Verwendung von längerkettigen Alkoholen wie im Beispiel 3 und 4 zeigt, daß aufgrund der freien OH-Gruppen der verwendeten Oleylalkohole die polaren Eigenschaften für eine größere Affinität zur Metalloberfläche sorgen, was zu gleichen WSD-Werten führt, obwohl das Angebot an S und P deutlich geringer ist.

### Vergleichsbeispiel 1

Handelsübliches 2-Ethylhexyl-zinkdithiophosphat mit 9,5 % Zink, 8 % Phosphor und 16 % Schwefel.

### Vergleichsbeispiel 2

2-Ethylhexylaminsalz der 2-Ethylhexyldithiophosphorsäure mit 16 % Mineralöl. Schwefelgehalt: ca. 11 %, Phosphorgehalt: ca. 5,5 %.

### Vergleichsbeispiel

Umsetzungsprodukt von 0,0-Diisopropyldithiophosphorsäure mit Ethylacrylat gemäß DE-A 29 21 620; S-Gehalt ca. 20 Gew.-%, P-Gehalt ca. 9,9 Gew.-%.

### Beispiel 1

354 g (1 Mol) O,O-Bis-(2-Ethylhexyl)-dithiophosphorsäure wurden mit 267 g (1 Mol) Ocenol^{R} 90/95 (technischer C18-Fettalkohol; JZ 90-95; Fa. Henkel) unter Stickstoff bei 130°C 8 Stunden unter Rühren erhitzt. Die nicht umgesetzten SH-Gruppen wurden mit 30 g (0,23 Mol) 2-Ethylhexylamin auf pH 8 neutralisiert.

Man erhielt ein klares, niedrigviskoses Produkt mit einer Säurezahl von 16.

Schwefelgehalt: ca. 10,4 %, Phosphorgehalt: ca. 5 %.

### Beispiel 2

490 g (1 Mol) eines Adduktes von Oleylalkohol mit 5 Mol EO (JZ 42-50) wurden mit 354 g (1 Mol) O,O-Bis-(2-Ethylhexyl)-dithiophosphorsäure unter Stickstoff 12 Stunden bei 125 bis 130°C unter Rühren erhitzt.

Man erhielt ein mittelviskoses, klares Produkt mit einer Säurezahl von 27.

Schwefelgehalt: ca. 7,6 %, Phosphorgehalt: ca. 3,7 %.

### Beispiel 3

242 g (1 Mol) 0,0-Diisobutyldithiophosphorsäure wurden mit 270 g (1 Mol) Ocenol^{R} 110/130 (JZ 110-130; Fa. Henkel) unter Stickstoff bei 120°C 9 Stunden unter Rühren erhitzt. Die restlichen SH-Gruppen wurden mit 20 g (0,15 Mol) 2-Ethylhexylamin auf pH 8 neutralisiert.

Man erhielt ein klares mittelviskoses Produkt mit einer Säurezahl von 15.

Schwefelgehalt: ca. 12,5 %, Phosphorgehalt: ca. 6,1 %.

### Beispiel 4

334 g (1 Mol) 0,0-Bis-(2-ethylhexyl)-dithiophosphorsäure wurden mit 270 g (1 Mol) Ocenol 110/130 (JZ 110-130; Fa. Henkel) unter Stickstoff bei 120°C 8 Stunden unter Rühren erhitzt. Die restlichen SH-Gruppen wurden mit 25 g (0,19 Mol) 2-Ethylhexylamin auf pH 8 neutralisiert.

Man erhielt ein klares mittelviskoses Produkt mit einer Säurezahl von 16.

Schwefelgehalt: 10,3 %, Phosphorgehalt: 5,0%.

Die Eigenschaften der o.g. Addukte bzw. Vergleichsprodukte als Schmiermitteladditive wurden nach DIN 51350 (Tentative Method IP 239/69) in einem Shell-Vierkugel-Apparat bestimmt. Im einzelnen wurden gemessen:
- 1. WL =: Weld Load (Schweißlast). Dies ist die Last, bei der die vier Kugeln des Apparats innerhalb von 60 sec zusammenschweißen.
- 2. WSD =: Wear Scar Diameter in mm. Dies ist der mittlere Verschleißdurchmesser bei einer Belastung von 800 N während einer Stunde.

Als Basisöl dient ein unlegiertes gemischtbasisches Spindelöl (Shell Gadus 22/40).

Die Belastung von 800 N wurde deswegen gewählt, weil bei 150 bzw. 300 N, wie nach DIN vorgeschrieben, keine Verschleißdurchmesser ermittelt werden konnten.

Ergebnisse der Prüfung im Vierkugel-Apparat:

| Schmiermittelzusatz Typ | Konz. in Gew.-% | WL N | WSD mm |
|---|---|---|---|
| Vergleichsbeispiel 1 | 1 | 1800 | 2,3 |
| | | | |
| Vergleichsbeispiel 2 | 1 | 1800 | 2,3 |
| | | | |
| Vergleichsbeispiel 3 | 1 | 1800 | 0,9 |
| | | | |
| Beispiel 1 | 1 | 1800 | 2,3 |
| | | | |
| Beispiel 2 | 1 | 1800 | 2,3 |
| | | | |
| Beispiel 3 | 1 | 1800 | 0,9 |
| | | | |
| Beispiel 4 | 1 | 1800 | 0,9 |

Wie sich aus der vorstehenden Tabelle ergibt, weisen die erfindungsgsmäßen Addukte die gleichen schmiertechnischen Eigenschaften wie die Vergleichsprodukte auf. Im Gegensatz zu diesen sind sie jedoch hydrolysestabil und metallfrei.

## Patentansprüche

1. Verwendung von Addukten von O,O-Dialkyl-dithiophosphorsäuren der allgemeinen Formel I
(R¹O)(R²O)P(S)-SH (I)
in der R¹ und R² gleich oder verschieden sind sowie eine geradkettige oder verzweigte Alkylgruppe mit 4 bis 18 Kohlenstoffatomen bedeuten,
an ungesättigte Verbindungen, ausgewählt aus
a) ungesättigten, geradkettigen oder verzweigten einwertigen Alkoholen mit 10 bis 24 Kohlenstoffatomen und einer Jodzahl im Bereich von 45 bis 180, und
b) Anlagerungsprodukten von Ethylenoxid und/oder Propylenoxid an ungesättigte, geradkettige oder verzweigte einwertige Alkohole mit 10 bis 24 Kohlenstoffatomen, mit Jodzahlen im Bereich von 30 bis 160,
als Anti-Wear-Additive für Schmiermittel.

2. Verwendung von Addukten gemäß Anspruch 1, wobei R¹ und R² jeweils eine geradkettige oder verzweigte Alkylgruppe mit 4 bis 12 Kohlenstoffatomen bedeuten.

3. Verwendung von Addukten gemäß Anspruch 1 oder 2, wobei R¹ und R² jeweils eine geradkettige oder verzweigte Alkylgruppe mit 4 bis 8 Kohlenstoffatomen bedeuten.

4. Verwendung von Addukten gemäß mindestens einem der Ansprüche 1 bis 3, wobei R¹ und R² jeweils eine Isobutyl-, Isoamyl- oder 2-Ethylhexylgruppe bedeuten.

5. Verwendung von Addukten gemäß mindestens einem der Ansprüche 1 bis 4, wobei die ungesättigten Verbindungen ungesättigte Fettalkohole mit 16 bis 22 Kohlenstoffatomen sind.

6. Verwendung von Addukten gemäß mindestens einem der Ansprüche 1 bis 4, wobei die ungesättigten Verbindungen Anlagerungsprodukte von Ethylenoxid und/oder Propylenoxid an ungesättigte Fettalkohole mit 16 bis 22 Kohlenstoffatomen sind.

7. Verwendung der Addukte gemäß mindestens einem der Ansprüche 1 bis 6 in wassermischbaren oder nicht-wassermischbaren Kühlschmierstoffen.

8. Verwendung der Addukte gemäß mindestens einem der Ansprüche 1 bis 6 in Hydraulikflüssigkeiten.

9. Verwendung der Additive gemäß mindestens einem der Ansprüche 1 bis 6 in Schmierölen.

10. Addukte von 0,0-Dialkyldithiophosphorsäuren der allgemeinen Formel I
(R¹O)(R²O)P(S)-SH (I)
in der R¹ und R² jeweils Alkylgruppen mit 4 bis 6 Kohlenstoffatomen, insbesondere Isobutyl- oder Isoamylgruppen, bedeuten, an ungesättigte Verbindungen, ausgewählt aus
a) ungesättigten, geradkettigen oder verzweigten einwertigen Alkoholen mit 10 bis 24 Kohlenstoffatomen und einer Jodzahl im Bereich von 45 bis 180, und
b) Anlagerungsprodukten von Ethylenoxid und/oder Propylenoxid
an ungesättigte, geradkettige oder verzweigte einwertige Alkohole mit 10 bis 24 Kohlenstoffatomen, mit Jodzahlen im Bereich von 30 bis 160.

## Claims

1. Use of adducts of O,O-dialkyldithiophosphoric acids of the general formula I
(R¹O) (R²O) P(S)-SH (I)
where R¹ and R² are identical or different and are a straight-chain or branched alkyl group having from 4 to 18 carbon atoms,
with unsaturated compounds selected from the group consisting of
a) unsaturated, straight-chain or branched monohydric alcohols having from 10 to 24 carbon atoms and an iodine number in the range from 45 to 180, and
b) addition products of ethylene oxide and/or propylene oxide with unsaturated, straight-chain or branched, monohydric alcohols having from 10 to 24 carbon atoms, having iodine numbers in the range from 30 to 160,
as anti-wear additives for lubricants.

2. Use of adducts as claimed in claim 1, wherein R¹ and R² are each a straight-chain or branched alkyl group having from 4 to 12 carbon atoms.

3. Use of adducts as claimed in claim 1 or 2, wherein R¹ and R² are each a straight-chain or branched alkyl group having from 4 to 8 carbon atoms.

4. Use of adducts as claimed in at least one of claims 1 to 3, wherein R¹ and R² are each an isobutyl, isoamyl or 2-ethylhexyl group.

5. Use of adducts as claimed in at least one of claims 1 to 4 with an unsaturated fatty alcohol having from 16 to 22 carbon atoms.

6. Use of adducts as claimed in at least one of claims 1 to 4 with addition products of ethylene oxide and/or propylene oxide with an unsaturated fatty alcohol having from 16 to 22 carbon atoms.

7. Use of the adducts as claimed in at least one of claims 1 to 6 in water-miscible or water-immiscible cooling lubricants.

8. Use of the adducts as claimed in at least one of claims 1 to 6 in hydraulic fluids.

9. Use of the additives as claimed in at least one of claims 1 to 6 in lubricating oils.

10. An adduct of an O,O-dialkyldithiophosphoric acid of the general formula I
(R¹O) (R²O) P(S)-SH (I)
where R¹ and R² are each an alkyl group having from 4 to 6 carbon atoms, in particular an isobutyl or isoamyl group, with an unsaturated compound selected from the group consisting of
a) unsaturated, straight-chain or branched monohydric alcohols having from 10 to 24 carbon atoms and an iodine number in the range from 45 to 180, and
b) addition products of ethylene oxide and/or propylene oxide with unsaturated, straight-chain or branched monohydric alcohols having from 10 to 24 carbon atoms, having iodine numbers in the range from 30 to 160.

## Revendications

1. Utilisation de produits d'addition d'acides O,O-dialkyl-dithiophosphoriques de formule générale I
(R¹O)(R²O)P(S)-SH (I)
où R¹ et R² sont identiques ou différents et représentent un groupement alkyle linéaire ou ramifié ayant de 4 à 18 atomes de carbone,
à des composés insaturés, choisis parmi
a) des alcools monohydriques insaturés, linéaires ou ramifiés, ayant de 10 à 24 atomes de carbone et un indice d'iode dans le domaine de 45 à 180, et
b) des produits d'addition de l'oxyde d'éthylène et/ou de l'oxyde de propylène à des alcools monohydriques insaturés, linéaires ou ramifiés, ayant de 10 à 24 atomes de carbone, avec des indices d'iode dans le domaine de 30 à 160,
en tant qu'additifs anti-usure pour des lubrifiants.

2. Utilisation de produits d'addition selon la revendication 1, R¹ et R² représentant à chaque fois un groupement alkyle linéaire ou ramifié ayant de 4 à 12 atomes de carbone.

3. Utilisation de produits d'addition selon la revendication 1 ou 2, R¹ et R² représentant à chaque fois un groupement alkyle linéaire ou ramifié ayant de 4 à 8 atomes de carbone.

4. Utilisation de produits d'addition selon au moins l'une quelconque des revendications 1 à 3, R¹ et R² représentant à chaque fois un groupement isobutyle, isoamyle ou 2-éthylhexyle.

5. Utilisation de produits d'addition selon au moins l'une quelconque des revendications 1 à 4, les composés insaturés étant des alcools gras insaturés ayant de 16 à 22 atomes de carbone.

6. Utilisation de produits d'addition selon au moins l'une quelconque des revendications 1 à 4, les composés insaturés étant des produite d'addition de l'oxyde d'éthylène et/ou de l'oxyde de propylène à des alcools gras insaturés ayant de 16 à 22 atomes de carbone.

7. Utilisation des produits d'addition selon au moins l'une quelconque des revendications 1 a 6, dans des substances lubrifiantes à effet de refroidissement, miscibles à l'eau ou non miscibles à l'eau.

8. Utilisation des produits d'addition selon au moins l'une quelconque des revendications 1 à 6 dans des fluides hydrauliques.

9. Utilisation des additifs selon au moins l'une quelconque des revendications 1 à 6 dans des huiles de graissage.

10. Produits d'addition d'acides O,O-dialkyldithiophosphoriques de formule générale I
(R¹O)(R²O)P(S)-SH (I)
où R¹ et R² représentent à chaque fois des groupements alkyle linéaire ou ramifié ayant de 4 à 6 atomes de carbone, en particulier des groupements isobutyle ou isoamyle, à des composés insaturés, choisis parmi
a) des alcools monohydriques insaturés, linéaires ou ramifiés, ayant de 10 à 24 atomes de carbone et un indice d'iode dans le domaine de 45 à 180, et
b) des produits d'addition de l'oxyde d'éthylène et/ou de l'oxyde de propylène à des alcools monohydriques insaturés, linéaires ou ramifiés, ayant de 10 à 24 atomes de carbone, avec des indices d'iode dans le domaine de 30 à 60.
